Europäisches Patentamt

European Patent Office

Office européen des brevets

(11) Veröffentlichungsnummer: **0 439 614 A1**

## (12) EUROPÄISCHE PATENTANMELDUNG
### veröffentlicht nach Art. 158 Abs. 3 EPÜ

(21) Anmeldenummer: 90902563.7

(22) Anmeldetag: 18.08.89

(86) Internationale Anmeldenummer:
PCT/SU89/00220

(97) Internationale Veröffentlichungsnummer:
WO 91/02695 (07.03.91 91/06)

(51) Int. Cl.⁵: **C01B** 3/38, C21D 1/74, C23C 8/20

(43) Veröffentlichungstag der Anmeldung:
**07.08.91 Patentblatt 91/32**

(84) Benannte Vertragsstaaten:
**AT CH DE FR GB IT LI SE**

(71) Anmelder: **VSESOJUZNY
NAUCHNO-ISSLEDOVATELSKY
PROEKTNO-KONSTRUKTORSKY I
TEKHNOLOGICHESKY INSTITUT
ELEKTROTERMICHESKOGO OBORUDOVANIA
VNIIETO, ul. Nizhegorodskaya, 29
Moscow 109052(SU)**

(72) Erfinder: **VASILIEV, Sergei Zinovievich**
**ul. Stroikovskaya, 12-2-25**
**Moscow, 109029(SU)**
Erfinder: **TELNJUK, Jury Nikolaevich**
**ul. Jubileinaya, 7a-47**
**Moskovskaya obl. Istra, 143500(SU)**
Erfinder: **MAERGOIZ, Iosif Izrailevich**
**per. Vasnetsova, 12-7**
**Moscow, 129090(SU)**

(74) Vertreter: **von Füner, Alexander, Dr.**
**Patentanwälte v. Füner, Ebbinghaus, Finck**
**Mariahilfplatz 2 & 3**
**W-8000 München 90(DE)**

(54) **GASGEMISCH FÜR WÄRMECHEMISCHES BEHANDELN VON METALLEN UND LEGIERUNGEN UND VERFAHREN ZUR HERSTELLUNG.**

(57) Das Gasgemisch zur chemisch-thermischen Behandlung von Metallen und Legierungen, dessen Komponenten im folgenden Verhältnis, Vol.-%, stehen:

Kohlenstoffoxid ............. 50,0 - 61,5
Wasserstoff ................. 38,5 - 50,0

Das Verfahren zur Herstellung des Gasgemisches durch Konvertierung gesättigter Kohlenwasserstoffe, die von eins bis vier Kohlenstoffatome aufweisen, durch Kohlenstoffdioxid in Gegenwart eines nickelhaltigen Katalysators, der auf eine Temperatur von 1123-1373 K erwärmt ist, in einer Menge von 1 bis 4 Raumteilen der genannten Kohlenwasserstoffe.

Die Einrichtung zur Herstellung des Gasgemisches enthält eine in einem Gehäuse (3) unter Bildung eines Ringspaltes (4) angeordnete Retorte (1) mit Katalysator (2) und einen mit ihren Eintrittsstutzen (7) kommunizierenden Mischer (8). Der Austrittsstutzen (9) der Retorte (1) ist mit dem Verbraucher verbunden. Im Ringspalt (4) sind mit einer Stromquelle verbundene Heizelemente (5, 6) untergebracht, deren Leistung sich nach der Höhe der Katalysator(2)schicht in Bewegungsrichtung des Gasstromes vermindert. Der Mischer (8) kommuniziert mit

einem Behälter (12) mit Kohlenstoffdioxid.

## TECHNISCHES GEBIET

Die Erfindung bezieht sich auf die Wärmebehandlung von Metallen und Legierungen, insbesondere auf ein Gemisch zur chemisch-thermischen Behandlung von Metallen und Legierungen sowie auf ein Verfahren und eine Einrichtung zu dessen Herstellung und kann beispielsweise in chemischer und anderen Industriezweigen Anwendung finden.

Eine der Hauptarten der Oberflächenverfestigung von Metallen und Legierungen ist chemisch-thermische Behandlung derselben, das heißt eine zielbewußte Änderung der chemischen Zusammensetzung und Eigenschaften von Oberflächenschichten.

Stand der Technik

Zu diesem Zweck verwendet man heute insbesondere eine bei hoher Temperatur verlaufende Erwärmung in verschiedenen Mitteln, beispielsweise in gasförmigen als am meisten technologiegerechten.

Als solche Mittel sind Mittel verbreitet, die solche Gasgemische darstellen, die durch die Konvertierung von Kohlenwasserstoffen erhalten werden.

Als Oxydationsmittel zur Konvertierung verwendet man in solchen Fällen üblicherweise Luft.

Man bezeichnet dabei die Gasgemische zur chemisch-thermischen Behandlung von Metallen, die Kohlenstoffoxid und Wasserstoff enthalten, als kontrollierbare Atmosphären zur Zementierung von Metallen und Legierungen, während die Gasgemische zur chemisch-thermischen Behandlung, enthaltend zusätzlich Ammoniak, werden als kontrollierbare Atmosphären zur Karbonitrierung von Metallen und Legierungen bezeichnet.

So bekannt ist ein Gasgemisch zur chemisch-thermischen Behandlung von Metallen und Legierungen, das 17,3 Vol.-% Kohlenstoffoxid, 20,7 Vol.-% Wasserstoff, Stickstoff als Best enthält (B.M. Estrin "Proizvodstvo i primenenie kontroliruemykh atmosfer", 1973, Metallurgia, Moskau, S. 115-116).

Das Verfahren zur Herstellung des genannten Gasgemisches zur chemisch-thermischen Behandlung von Metallen und Legierungen verwirklicht man wie folgt. Man unterwirft gesättigte Kohlenwasserstoffe mit dem Gehalt an Kohlenstoffatomen von 1 bis 4 einer Konvertierung durch Oxydationsmittel in Gegenwart von einem nickelhaltigen Katalysator, der auf eine Temperatur von 1123-1373 K erwärmt ist. Als Oxydationsmittel benutzt man dabei auf 293-303 K gekühlte gasförmige Verbrennungsprodukte gesättigter Kohlenwasserstoffe.

Dieses Gasgemisch zur chemisch-thermischen Behandlung von Metallen und Legierungen weist ungenügend hohe Aufkohlungs- und Reduktionseigenschaften auf, die zu einer ungleichmäßigen Verteilung von Kohlenstoff nach der Tiefe der zementierten Schicht des zu behandelnden Metalls, insbesondere Stahls führen.

Bekannt ist ein Gasgemisch zur chemisch-thermischen Behandlung von Metallen, enthaltend 20 Vol.-% Kohlenstoffoxid und 40 Vol.-% Wasserstoff (Stickstoff - der Rest). (Sovremennoe elektrotermicheskoe oborudovanie dlya termoobrabotki metallicheskikh materialov, Sammelband, 1979, Moskau, L.A. Mikhailov "Vybor sostava atmosfery pri tsementatsii", S. 44).

Das Verfahren zur Erhaltung dieses Gasgemisches zur chemisch-thermischen Behandlung von Metallen und Legierungen führt man wie folgt durch. Man unterwirft gesättigte Kohlenwasserstoffe, die von 1 bis 4 Kohlenstoffatome enthalten, einer Konvertierung durch Oxydationsmittel in Gegenwart eines nickelhaltigen Katalysators, das auf eine Temperatur von 1123-1373 K erwärmt ist. Dabei benutzt man Luft als Oxydationsmittel.

Bekannt ist auch ein Gasgemisch zur chemisch-thermischen Behandlung von Metallen und Legierungen, das bis 20 Vol.-% Kohlenstoffoxid, bis 40 Vol.-% Wasserstoff, bis 1 Vol.-% Ammoniak und Stickstoff als Rest enthält (Metallovedenie i termicheskaya obrabotka metallov, Nr- 6, 1982, Moskau, A.K. Tikhonov und andere "Osobennosti izmenenia kontroliruemykh atmosfer s 20 do 40 % $H_2$ pri tsementatsii i nitrotsementatsii", S. 30-33).

Alle diese bekannten Gasgemische zur chemisch-thermischen Behandlung von Metallen weisen ungenügend hohe Aufkohlungs- und Reduktionseigenschaften auf, was wie obenerwähnt zu einer ungleichmäßigen Verteilung von Kohlenstoff nach der Tiefe der zementierten Schicht des Behandlungsmetalls oder der Legierung führt.

Aus den praktischen Angaben bei Benutzung einer Sechszonenlinie der Firma "Halloroft" (USA) und des Exo-Endogenerators derselben Firma ist es bekannt, daß die Geschwindigkeit des Prozesses der chemisch-thermischen Behandlung unter Anwendung eines Gasgemisches, das zu 20 Vol.-% aus Kohlenstoffoxid, zu 40 Vol.-% aus Wasserstoff (Stickstoff - der Rest) besteht, für kohlenstoffarmen Chrommanganstahl bei der Temperatur von 1203 K und der Behandlungsdauer von 17,2 h gleich 0,12 - 0,14 mm/h ist (Metallovedenie i termicheskaya obrabotka metallov, Nr. 6, 1982, Moskau, A.K. Tikhonov "Osobennosti primeneniia kontroliruemykh atmosfer s 20 do 40 % $H_2$ pri tsementatsii i nitrotsementatsii", S. 30-33). Die niedrige Geschwindigkeit der Sättigung der behandelten Metalle mit Kohlenstoff verursacht eine größere Dauer des Prozesses, was die Vergrößerung des Kornes der Werkstücke und somit die Verschlechterung der mechanischen Eigenschaften wie die Erhöhung der Sprödigkeit, die Verminderung der Ermüdungsbeständigkeit usw. hervorruft.

Bekannt ist eine Einrichtung zur Herstellung des Gasgemisches (I.I. Maergoiz und andere "Kontroliruemye atmosfery v elektricheskikh pechakh", 1971, Energia, Moskau, S. 13-26), enthaltend eine Retorte mit Katalysator, die im Gehäuse gleichachsig unter Bildung eines Ringspaltes angeordnet ist. Im Ringspalt sind mit einer Stromquelle verbundene Heizelemente untergebracht. Der Eintrittsstutzen der Retorte kommuniziert mit einem Mischer und der Austrittsstutzen mit dem Verbraucher - einem Ofen.

Die Einrichtung ermöglicht es, das Gasgemisch zur chemisch-thermischen Behandlung von Metallen und Legierungen meist auf eine Tiefe von bis 2-3 mm zu erhalten. Aber da sich die Arbeit der vorliegenden Einrichtung auf die Konvertierung gasförmiger Kohlenwasserstoffe durch Luft gründet, dauert der Zementierungsprozeß relativ lange, weil im Bestand des Gasgemisches Ballaststickstoff enthalten ist und die Aufkohlungs- und Reduktionskomponenten nicht genug sind.

Offenbarung der Erfindung

Der Erfindung liegt die Aufgabe zugrunde, ein solches Gasgemisch zur chemisch-thermischen Behandlung von Metallen und Legierungen durch Änderung des Mengenverhältnisses der Komponenten zu entwickeln, das höhere Aufkohlungs- und Reduktionseigenschaften durch die Erhöhung der Aufkohlungsgeschwindigkeit der zu behandelnden Metalle oder Legierungen unter gleichmäßiger Verteilung von Kohlenstoff nach der Tiefe der zementierten oder karbonitrierten Schicht aufweist, sowie ein Verfahren und eine Einrichtung zur Herstellung solches Gasgemisches zu schaffen.

Die gestellte Aufgabe wird dadurch gelöst, daß im erfindungsgemäßen Gasgemisch zur chemisch-thermischen Behandlung von Metallen und Legierungen, enthaltend Kohlenstoffoxid und Wasserstoff, die Komponenten im folgenden Verhältnis, Vol.-%, stehen:

$$\text{Kohlenstoffoxid} \dots\dots\dots\dots\dots 50{,}0 - 61{,}5$$

$$\text{Wasserstoff} \dots\dots\dots\dots\dots\dots 38{,}5 - 50{,}0$$

Es ist zweckmäßig, daß das erfindungsgemäße Gasgemisch zur chemisch-thermischen Behandlung von Metallen und Legierungen zusätzlich Ammoniak unter dem folgenden Verhältnis der Komponenten, Vol.-%, aufweist:

$$\text{Kohlenstoffoxid} \dots\dots\dots\dots\dots 47{,}0 - 59{,}7$$

$$\text{Wasserstoff} \dots\dots\dots\dots\dots\dots 37{,}3 - 47{,}0$$

$$\text{Ammoniak} \dots\dots\dots\dots\dots\dots\dots 3{,}0 - 6{,}0$$

Die gestellte Aufgabe wird dadurch gelöst, daß im Verfahren zur Herstellung des erfindungsgemäßen Gasgemisches zur chemisch-thermischen Behandlung von Metallen und Legierungen, darin bestehend, daß man gesättigte Kohlenwasserstoffe, die von eins bis vier Kohlenstoffatome aufweisen, einer Konvertierung durch ein Oxydationsmittel in Gegenwart von nickelhaltigem Katalysator, der auf 1123-1373 K erwärmt ist, unterwirft, erfindungsgemäß, als Oxydationsmittel Kohlenstoffdioxid in einer Menge von 1 bis 4 Raumteilen der genannten Kohlenwasserstoffe verwendet wird.

Die gestellte Aufgabe wird dadurch gelöst, daß die Einrichtung zur Herstellung des Gasgemisches, die eine Retorte mit Katalysator, die im Gehäuse gleichachsig und unter Bildung eines Ringspaltes angeordnet ist, in dem mit einer Stromquelle verbundene Heizelemente untergebracht sind, und einen Mischer, der mit dem Eintrittsstutzen der Retorte kommuniziert, deren Austrittsstutzen mit dem Verbraucher verbunden ist, enthält, erfindungsgemäß, mit einem Behälter mit Kohlenstoffdioxid, der mit dem Mischer kommuniziert, versehen ist, und die Leistung der Heizelemente sich nach der Höhe der Katalysatorschicht in Bewegungsrichtung des Gasstromes vermindert.

Das vorgeschlagene Gasgemisch zur chemisch-thermischen Behandlung von Metallen und Legierungen hat die erhöhten Aufkohlungs- und Reduktionseigenschaften durch die hohe Geschwindigkeit der Aufkohlung der zu behandelnden Metalle und Legierungen unter gleichmäßiger Verteilung von Kohlenstoff nach der Tiefe der zementierten oder karbonitrierten Schicht der zu behandelnden Metalle oder Legierungen, wodurch es ermöglicht wird, die Lebensdauer der mit dem erfindungsgemäßen Gasgemisch kontaktierenden Ausrüstungen zu verlängern.

Im Vergleich zu den bekannten ermöglicht es die erfindungsgemäße Einrichtung zur Herstellung des Gasgemisches durch das Vorhandensein eines Behälters mit Kohlenstoffdioxid und die der Höhe der Katalysatorschicht entsprechende allmähliche Verminderung der Leistung der Heizelemente, ein Gasgemisch zur chemisch-thermischen Behandlung von Metallen und Legierungen zu herstellen, in dem der Ballaststickstoff nicht vorhanden ist und der Gehalt an der Aufkohlungskomponente, Kohlenstoffoxid und der Reduktionskomponente, Wasserstoff, wesentlich ansteigt. Solch eine Zusammensetzung des Gasgemisches verbessert seine Aufkohlungs- und Reduktionseigenschaften.

Kurzbeschreibung der Zeichnungen

Die vorliegende Erfindung wird durch eine eingehende Beschreibung eines konkreten Ausführungsbeispiels unter Bezugnahme aus die beigelegte Zeichnung näher erläutert, in der die erfindungsgemäße Einrichtung zur Herstellung eines Gasgemisches zur chemisch-thermischen Behandlung von Metallen und Legierungen gezeigt ist.

Beste Ausführungsvariante der Erfindung

Als gesättigte Kohlenwasserstoffe, die von eins bis vier Kohlenstoffatome aufweisen, benutzt man verschiedene Kohlenwasserstoffe oder deren Gemische, insbesondere Methan, Äthan, Propan, Butan, ein Propan-Butan-Gemisch, das 40-60 % Propan vom Gesamtvolumen enthält.

Wenn das erfindungsgemäße Gasgemisch zur chemisch-thermischen Behandlung von Metallen und Legierungen, das aus Kohlenstoffoxid und Wasserstoff besteht (kontrollierbare Atmosphäre für Zementation), mehr als 61,5 Vol.-% Kohlenstoffoxid und entsprechenderweise weniger als 38 Vol.-% Wasserstoff oder weniger als 50 Vol.-% Kohlenstoffoxid und entsprechenderweise mehr als 50 Vol.-% Wasserstoff enthält, so verschlechtern sich seine Aufkohlungs- und Reduktionseigenschaften.

Wenn im erfindungsgemäßen Gasgemisch, das Ammoniak enthält und wie erwähnt kontrollierbare Atmosphäre für Zementation genannt wird, die Menge von Kohlenstoffoxid mehr als 59,7 Vol.% und von Wasserstoff weniger als 37,3 Vol.-% oder von Kohlenstoffoxid weniger als 47,0 Vol.-% und von Wasserstoff mehr als 47,0 Vol.-% sein wird, so verschlechtern sich die Aufkohlungs- und Reduktionseigenschaften dieses Gemisches.

Die Einführung von Ammoniak ins erfindungsgemäße Gasgemisch zur chemisch-thermischen Behandlung von Metallen und Legierungen ermöglicht es, zusätzlich die Geschwindigkeit der Sättigung des zu behandelnden Metalls oder der Legierung mit Kohlenstoff besonders bei niedrigen (1123-1143 K) Temperaturen zu vergrößern.

Die Einführung von Ammoniak ins erfindungsgemäße Gasgemisch in der Menge von weniger als 3 Vol.-% ermöglicht es nicht, die Geschwindigkeit der Sättigung des zu behandelnden Metalls mit Kohlenstoff zu steigern.

Wenn die Menge des in das genannte Gemisch einzuführenden Ammoniaks 6 Vol.-% übersteigen wird, so wird es zu dessen zusätzlichem Verbrauch ohne Verbesserung der Aufkohlungseigenschaften des Gasgemisches führen.

Das erfindungsgemäße Verfahren zur Herstellung des Gasgemisches zur chemisch-thermischen Behandlung von Metallen und Legierungen wird wie folgt durchgeführt.

Gesättigte Kohlenwasserstoffe, die von eins bis vier Kohlenstoffatome enthalten, werden einer Konvertierung von einem Oxydationsmittel unterworfen.

Zu diesem Zweck werden die gesättigten Kohlenwasserstoffe und das Oxydationsmittel miteinander vermischt. Dabei verwendet man als Oxydationsmittel Kohlenstoffdioxid in einer Menge von eins bis vier Raumteilen der genannten Kohlenwasserstoffe. Man erwärmt das erhaltene Gasgemisch in Gegenwart eines nickelhaltigen Katalysators, der auf eine Temperatur von 1123-1373 K erwärmt ist. Als Katalysator verwendet man verschiedene nickelhaltige Katalysatoren beispielsweise mit einem Nickelgehalt von 6 bis 13 Ma.-%, ungerechnet auf Nickeloxid. Man benutzt das erhaltene erfindungsgemäße Gasgemisch zur chemisch-thermischen Behandlung von Metallen und Legierungen.

Bei der Anwendung von Kohlenstoffdioxid in einer Menge von weniger als 1 Raumteil der genannten Kohlenwasserstoffe, geht ein Rußbildungsprozeß vor sich.

Wenn die Menge von Kohlenstoffdioxid, das im erfindungsgemäßen Verfahren ausgenutzt ist, vier Raumteile der genannten Kohlenwasserstoffe übersteigen wird, so wird das erhaltene Gasgemisch keine Aufkohlungs- und Reduktionseigenschaften aufweisen.

Die Verminderung der Temperatur bei Verwirklichung des erfindungsgemäßen Verfahrens auf unter 1123 K führt zu einem Überkohlen und Ausfall des Katalysators, wodurch der Konvertierungsprozeß beendet wird.

Die Ausnutzung der Temperaturen oberhalb 1373 K im erfindungsgemäßen Verfahren ist unzweckmäßig, weil das bei der Vergrößerung des Energieaufwandes die Aufkohlungs- und Reduktionseigenschaften des erhaltenen Gasgemisches nicht verbessert werden.

Die Einrichtung zur Herstellung des Gasgemisches enthält eine Retorte 1 mit nickelhaltigem Katalysator 2. Die Retorte 1 ist gleichachsig in einem ausgekleideten Gehäuse 3 unter Bildung eines Ringspaltes 4 angeordnet. In dem Ringspalt 4 sind Heizelemente 5 und 6 untergebracht, deren Leistung sich nach der Höhe der Katalysator(2)schicht in Bewegungsrichtung des Gasstroms vermindert. Der Eintrittsstutzen 7 der Retorte 1 kommuniziert mit einem Mischer 8. Der Austrittsstutzen 9 der Retorte 1 kommuniziert mit dem Verbraucher (nicht angedeutet). Der Mischer 8 ist durch einen Stutzen 10 mit einer Kohlenwasserstoffgasquelle (nicht angedeutet) und durch einen Stutzen 11 mit einem Behälter 12 mit Kohlenstoffdioxid verbunden.

Die Einrichtung zur Herstellung des Gasgemisches arbeitet wie folgt.

Das Kohlenwasserstoffgas tritt durch den Stutzen 10 in den Mischer 8. In denselben tritt aus dem Behälter 12 durch den Stutzen 11 Kohlenstoffdioxid. Das im Mischer 8 gebildete Gemisch aus Kohlenstoffdioxid und Kohlenwasserstoff gelangt durch den Eintrittsstutzen 7 in die Retorte 1, die mit nickelhaltigem Katalysator 2 ausgefüllt ist. In der Katalysator(2)schicht erfolgt eine Konvertierung des Kohlenwasserstoffes durch das Kohlenstoffdioxid unter großer Wärmeaufnahme, die sich nach der Höhe der Katalysator(2)-schicht in Bewegungsrichtung des Gasstromes vermindert. Die fehlende Wärmemenge wird durch die im Gehäuse 3 eingestellten Heizelemente 5 und 6 ausgeglichen. Die aus der Retorte 1 durch den Stutzen 9 austretenden Konvertierungsprodukte enthalten 50-61,5 Vol.-% CO und 38,5-50 Vol.-% $H_2$.

Zum besseren Verständnis der vorliegenden Erfindung werden folgende Ausführungsbeispiele derselben angeführt.

Beispiel 1

Das erfindungsgemäße Gasgemisch zur chemisch-thermischen Behandlung von Metallen und Legierungen, enthaltend die Komponenten im folgenden Verhältnis, Vol.-%:

Kohlenstoffdioxid .............. 61,5

Wasserstoff .................... 38,5

Man erhält es erfindungsgemäß durch die Konvertierung von Butan mit Kohlenstoffdioxid, wobei Kohlenstoffdioxid und Butan im Verhältnis 4:1 stehen.

Man verwirklicht die Konvertierung in Gegenwart eines Katalysators, der 7,5 Vol.-% Nickeloxid enthält und auf eine Temperatur Von 1373 K erwärmt ist.

Man verwendet das erhaltene Gasgemisch zur chemisch-thermischen Behandlung (Zementation) eines kohlenstoffarmen Stahls, der 0,2 Ma.-% Kohlenstoff enthält, bei einer Temperatur von 1193 ± 10 K. Man bestimmt die Geschwindigkeit der Sättigung des zu behandelnden Stahls mit Kohlenstoff.

Das erfindungsgemäße Gasgemisch zur chemisch-thermischen von Metallen wird auch zur Behandlung von Bohrmeißelteilen aus Chrom-Nickel-Legierungen benutzt.

Man bestimmt die Verteilung des Kohlenstoffes nach der Tiefe der zementierten Stahlschicht der Werkstücks sowie deren bezogene Standzeit. Die Ergebnisse sind in den nachstehenden Tabellen 1 und 3 angegeben.

Beispiel 2

Das erfindungsgemäße Gasgemisch zur chemisch-thermischen Behandlung von Metallen und Legierungen, das die Komponenten im folgenden Verhältnis, Vol.-%, enthält:

Kohlenstoffoxid ................ 50

Wasserstoff ................... 50

Es wird durch die Konvertierung von Methan durch kohlenstoffdioxid analog dem Beispiel 1 hergestellt, dabei beträgt das Verhältnis des Kohlenstoffdioxids zum Methan 1:1, und die Konvertierung wird in Gegenwart eines Katalysators durchgeführt, der 13 Ma.-% Nickeloxid enthält, das auf eine Temperatur von 1123 K erwärmt ist. Man verwendet das erhaltene Gemisch zur chemisch-thermischen Behandlung von Stahl unter den Bedingungen, die ähnlich wie in Beispiel 1 sind. Dabei wird die Geschwindigkeit der Sättigung des Stahls mit dem Kohlenstoff ermittelt.

Außerdem führt man die Behandlung mit dem erhaltenen Gasgemisch von Bohrmeißelteilen aus Chrom-Nickel-Stählen analog dem Beispiel 1 durch, bestimmt die Verteilung von Kohlenstoff nach der Tiefe der zementierten Schicht des Stahls sowie die bezogene Standzeit dieser Teile. Die Ergebnisse sind in den nachstehenden Tabellen 1 und 3 angegeben.

Beispiel 3

Das erfindungsgemäße Gasgemisch zur chemisch-thermischen Behandlung von Metallen und Legierungen, das die Komponenten im folgenden Verhältnis, Vol.-%, enthält:

Kohlenstoffoxid ............... 60

Wasserstoff .................. 40

Man erhält es durch die Konvertierung von Propan durch Kohlenstoffdioxid analog dem Beispiel 1, dabei beträgt aber das Verhältnis von Kohlenstoffdioxid zu Propan 3:1, die Konvertierung verwirklicht man unter Anwendung eines 6 Ma.-% Nickeloxid enthaltenden Katalysators, das auf eine Temperatur von 1353 K erwärmt ist. Das erhaltene Gemisch wird unter den Bedingungen, die den in Beispiel 1 beschriebenen analog sind, benutzt. Man bestimmt die Geschwindigkeit der Sättigung des Stahls mit Kohlenstoff. Die Ergebnisse sind in der nachstehenden Tabelle 1 angegeben.

Beispiel 4

Das erfindungsgemäße Gasgemisch zur chemisch-thermischen Behandlung von Metallen und Legierungen, das die Komponenten im folgenden Verhältnis, Vol.-%, enthält:

Kohlenstoffoxid ............. 59,7

Wasserstoff ................. 37,3

Ammoniak ................... 3,0

Man erhält es analog dem Beispiel 1, aber man führt dabei in das hergestellte Gasgemisch 3,0 Vol.-% Ammoniak ein.

Man verwendet das erfindungsgemäße Gasgemisch zur chemisch-thermischen Behandlung eines kohlenstoffarmen Stahls analog dem Beispiel 1, aber die Temperatur des Prozesses der Behandlung beträgt dabei 1123±10 K. Man bestimmt die Geschwindigkeit der Sättigung des zu behandelnden Stahls mit Kohlenstoff. Außerdem führt man die Behandlung von Bohrmeißelteilen aus Chrom-Nickel-Stählen mit dem erfindungsgemäßen Gasgemische durch und bestimmt die Verteilung von Kohlenstoff nach der Tiefe der karbonitrierten Stahlschicht und die bezogene Standzeit dieser Teile. Die Ergebnisse sind in den nachstehenden Tabellen 2 und 3 angegeben.

Beispiel 5

Das erfindungsgemäße Gasgemisch zur chemisch-thermischen Behandlung von Metallen und Legierungen, dessen Komponenten im folgenden Verhältnis, Vol.-%, stehen:

Kohlenstoffoxid ............... 47,0

Wasserstoff ................... 47,0

Ammoniak ...................... 6,0

Man erhält es analog dem Beispiel 1, aber man führt dabei in das hergestellte Gasgemisch 6,0 Vol.-% Ammoniak eine.

Man verwendet das erfindungsgemäße Gasgemisch zur chemisch-thermischen Behandlung eines Stahls analog dem Beispiel 4 und bestimmt die Geschwindigkeit der Sättigung des Stahls mit Kohlenstoff.

Außerdem nimmt man die Behandlung von Bohrmeißelteilen aus Chrom-Nickel-Stählen mit dem erfindungsgemäßen Gasgemisch vor und bestimmt die Verteilung des Kohlenstoffes nach der Tiefe der Karbonitrierten Stahlschicht und die bezogene Standzeit dieser Teile. Die Ergebnisse der Prüfungen sind in den nachstehenden Tabellen 2 und 3 angegeben.

Beispiel 6

Das erfindungsgemäße Gasgemisch zur chemisch-thermischen Behandlung von Metallen und Legierungen, dessen Komponenten im folgenden Verhältnis, Vol.-%, stehen:

Kohlenstoffoxid ............... 56,4

Wasserstoff ................... 38,6

Ammoniak ...................... 5,0

Man erhält es analog dem Beispiel 3, aber man führt dabei in das hergestellte Gasgemisch 5,0 Vol.-% Ammoniak ein.

Man verwendet das erfindungsgemäße Gasgemisch zur chemisch-thermischen Behandlung eines kohlenstoffarmen Stahls analog dem Beispiel 4 und bestimmt die Geschwindigkeit der Sättigung dieses Stahls mit Kohlenstoff. Die Ergebnisse sind in der nachstehenden Tabelle 2 angegeben.

Tabelle 1

| Gasgemisch zur chemisch-<br>-thermischen Behandlung<br>von Metallen und Legie-<br>rungen (zur Zementierung) | Geschwindigkeit der Sät-<br>tigung des zu behandeln-<br>den kohlenstoffarmen<br>Stahls mit Kohlenstoff,<br>mm/h |
|---|---|
| Nach Beispiel 1 | 0,20 - 0,23 |
| Nach Beispiel 2 | 0,24 - 0,26 |
| Nach Beispiel 3 | 0,20 - 0,23 |
| Nach der bekannten Lösung<br>(20 Vol.-% Kohlenstoffoxid,<br>40 Vol.-% Wasserstoff, der<br>Rest - Stickstoff) | 0,12 - 0,14 |

Tabelle 2

| Gasgemisch zur chemisch-<br>-thermischen Behandlung<br>von Metallen und Legie-<br>rungen (Zementierung) | Geschwindigkeit der Auf-<br>kohlung des zu behandeln-<br>den kohlenstoffarmen Stahls,<br>mm/h |
|---|---|
| Nach Beispiel 4 | 0,12-0,14 |
| Nach Beispiel 5 | 0,12-0,14 |
| Nach Beispiel 6 | 0,12-0,14 |
| Nach der bekannten Lösung<br>(20 Vol.-% Kohlenstoff-<br>oxid, 40 Vol.-% Wasser-<br>stoff, bis 1 Vol.-% Ammo-<br>niak, der Rest - Stick-<br>stoff) | 0,07-0,09 |

9

Tabelle 3

| Zusammensetzung des Gasgemisches zur chemisch-thermischen Behandlung von Metallen u. Legierungen | [*]Gradient der Kohlenstoffkonzentration nach der Tiefe der zementierten o. karbonitrierten Schicht von Stahl, $\alpha$, % | [**]Bezogene Standzeit der Teile, % |
|---|---|---|
| Nach Beispiel 1 | 7 | 105 |
| Nach Beispiel 2 | 5 | 107 |
| Nach Beispiel 4 | 7 | 105 |
| Nach Beispiel 5 | 5 | 107 |

[*]) $\dfrac{C - C^1}{C}$ 100, worin

C – Konzentration von Kohlenstoff auf der Oberfläche des Stahls, Ma.-%,

$C^1$– Konzentration von Kohlenstoff auf 1/3 der Gesamttiefe der zementierten oder karbonitrierten Schicht, Ma.-% ist.

[**]) für 100 % ist die Standzeit derselben Teile von Bohrmeißeln angenommen, die unter Anwendung des Gasgemisches nach der bekannten Lösung behandelt sind (Metallovedenie i termicheskaya obrabotka metallov, Nr. 6, 1982, Moskau, A.K. Tikhonov und andere "Osobennosti primenenia kontroliruemykh atmosfer s 20 do 40 % pri tsementatsii i nitrozementatsii, S. 30-33).

Industrielle Anwendbarkeit

Es ist am zweckmäßigsten, die vorliegende Erfindung bei den Prozessen chemisch-thermischer Behandlung von Metallen und Legierungen beispielsweise in chemischer und petrolchemischer Industrie sowie in anderen Industriezweigen anzuwenden.

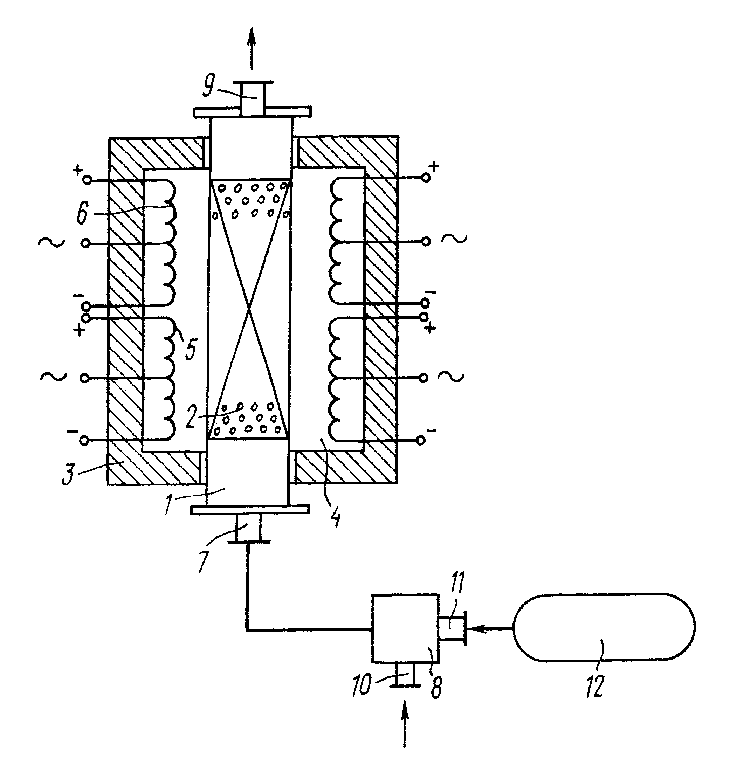

**Patentansprüche**

1. Gasgemisch zur chemisch-thermischen Behandlung von Metallen und Legierungen, das Kohlenstoffoxid und Wasserstoff enthält, dadurch **gekennzeichnet**, daß dessen Komponenten im folgenden Verhältnis stehen, Vol.-%:

$$\text{Kohlenstoffoxid} \dots\dots\dots 50,0 - 61,5$$
$$\text{Wasserstoff} \dots\dots\dots\dots 38,5 - 50,0$$

2. Gasgemisch zur chemisch-thermischen Behandlung nach Anspruch 1, dadurch **gekennzeichnet**, daß es zusätzlich Ammoniak unter dem folgenden Verhältnis der Komponenten, Vol.-%, enthält:

$$\text{Kohlenstoffoxid} \dots\dots\dots 47,0 - 59,7$$
$$\text{Wasserstoff} \dots\dots\dots\dots 37,3 - 47,0$$
$$\text{Ammoniak} \dots\dots\dots\dots 3,0 - 6,0$$

3. Verfahren zur Herstellung des Gasgemisches nach Anspruch 1, das eine Konvertierung von gesättigten Kohlenwasserstoffen, die von eins bis vier Kohlenstoffatome enthalten, durch ein Oxydationsmittel in Gegenwart eines nickelhaltigen Katalysators, der auf 1123-1373 K erwärmt ist, vorsieht, dadurch **gekennzeichnet**, daß man als Oxydationsmittel Kohlenstoffdioxid in einer Menge von 1 bis 4 Raumteilen der genannten Kohlenwasserstoffe ausnutzt.

4. Einrichtung zur Herstellung des Gasgemisches nach Anspruch 1, die eine Retorte (1) mit Katalysator (2), die in einem Gehäuse (3) gleichachsig unter Bildung eines Ringspaltes (4) angeordnet ist, in dem mit einer Stromquelle verbundene Heizelemente (5, 6) untergebracht sind, und einen Mischer (8) enthält, der mit dem Eintrittsstutzen (7) der Retorte (1) kommuniziert, deren Austrittsstutzen (9) mit dem Verbraucher verbunden ist, dadurch **gekennzeichnet**, daß sie durch einen Behälter (12) mit Kohlenstoffdioxid versehen ist, der mit dem Mischer (8) kommuniziert, und daß die Leistung der Elemente (5, 6) sich nach der Höhe der Katalysator(2)schicht in Bewegungsrichtung des Gasstromes vermindert.

# INTERNATIONAL SEARCH REPORT

International Application No PCT/SU 89/00220

**I. CLASSIFICATION OF SUBJECT MATTER** (if several classification symbols apply, indicate all)

According to International Patent Classification (IPC) or to both National Classification and IPC

IPC$^5$   C01B 3/38; C21D 1/74; C23C 8/20

**II. FIELDS SEARCHED**

Minimum Documentation Searched

| Classification System | Classification Symbols |
|---|---|
| IPC$^4$ | C01B 3/34,3/38; C21D 1/74; C22B 5/12; C22F 1/02 |

Documentation Searched other than Minimum Documentation
to the Extent that such Documents are Included in the Fields Searched

**III. DOCUMENTS CONSIDERED TO BE RELEVANT**

| Category | Citation of Document, with indication, where appropriate, of the relevant passages | Relevant to Claim No. |
|---|---|---|
| A | SU, A3, 680634 (Inostrannaya firma Eisenwerk-gesellschaft Maximilianshütte Gmbh), 25 August 1979 (25.08.79), samples 1-3 | 1-3 |
| A | SU, A1, 833469 (S.Z. Vasiliev et al.), 06 June 1981 (06.06.81) | 1-3 |
| A | SU, A1, 184281 (L.V. Podgursky), 15 September 1966 (15.09.66) | 4 |
| A | US, A, 4191598 (MIDLAND-ROSS CORPORATION) 04 March 1980 (04.03.80), the abstract | 4 |
| A | PL, B, 138427 (POLITECHNIKA LODZKA), 30 January 1988 (30.01.88), the claims, the drawing | 4 |
| A | P.A. Proshkin "Khimiko-termicheskaya abrabotka metallov-karbonitratsia", 1984, Metallurgia (Moscow), pages 214-216 | 1-2 |
| A | SU, A1, 476339 (N.M. Buslovich et al.), 26 November 1975 (26.11.75), column 1, lines 18-25 | 1 |
| A | FR, A1, 2527641 (L'AIR LIQUIDE, SOCIETE ANONYME POUR L'ETUDE ET L'EXPLOITATION DES PROCEDES GEORGES CLAUDE), 02 December 1983 (02.12.83), figure 3, the claims | 2 |

./.

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| 02 April 1990 (02.04.90) | 24 April 1990 (24.04.90) |

| International Searching Authority | Signature of Authorized Officer |
|---|---|
| ISA/SU | |

Form PCT/ISA/210 (second sheet) (January 1985)

| III. DOCUMENTS CONSIDERED TO BE RELEVANT    (CONTINUED FROM THE SECOND SHEET) | | |
|---|---|---|
| Category* | Citation of Document, with indication, where appropriate, of the relevant passages | Relevant to Claim No |
| A | Referativny zhurnal "Metallurgia", No. 8, 1977, (VINITI Moscow), ref. 8 I963, Simidzu Dzjugo, "Regulirovanie atmosfery v pechakh dlya termoobrabotki metallov", Kaiso, Instrumentation", 1977, 20, No. 2, 70-73 (Jap.) | 3 |
| A | Referativny zhurnal "Tekhnologia mashino-stroenia", No. 6, 1980, (VINITI, Moscow), ref. 5 B241, "Opredelenie optimalnoi tekhnologii termicheskoi obrabotki stalei", Dumitrescu R. "Bul.Univ.Brasov", 1978 (1979), A, 20-C, 195-202 (rum) | 3 |

Form PCT/ISA/210 (extra sheet) (January 1985)